(19) Europäisches Patentamt European Patent Office Office européen des brevets

(11) **EP 4 475 035 A1**

(12) **EUROPEAN PATENT APPLICATION**
published in accordance with Art. 153(4) EPC

(43) Date of publication:
**11.12.2024 Bulletin 2024/50**

(21) Application number: **23749475.2**

(22) Date of filing: **10.01.2023**

(51) International Patent Classification (IPC):
***G06N 3/044*** *(2023.01)*

(52) Cooperative Patent Classification (CPC):
**G06N 3/044**

(86) International application number:
**PCT/JP2023/000302**

(87) International publication number:
**WO 2023/149158 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.02.2022 JP 2022014174**

(71) Applicant: **Sony Group Corporation Tokyo 108-0075 (JP)**

(72) Inventors:
• **YOSHIMURA, Masakazu**
  **Tokyo 108-0075 (JP)**
• **IRIE, Atsushi**
  **Tokyo 108-0075 (JP)**
• **OTSUKA, Junji**
  **Tokyo 108-0075 (JP)**

(74) Representative: **2SPL Patentanwälte PartG mbB Landaubogen 3 81373 München (DE)**

(54) **INFORMATION PROCESSING DEVICE, INFORMATION PROCESSING METHOD, AND PROGRAM**

(57)    To implement highly efficient and highly accurate feedback with the calculation amount suppressed.

There is provided an information processing device including a processing unit that executes processing using a neural network, in which the processing unit performs feedback related to a plurality of function parameters respectively used in a plurality of intermediate layers in the neural network on the basis of an output from the intermediate layers.

FIG. 6

EP 4 475 035 A1

**Description**

TECHNICAL FIELD

The present disclosure relates to an information processing device, an information processing method, and a program.

BACKGROUND ART

In recent years, systems using neural networks have been actively developed. For example, Patent Document 1 discloses a prediction system using a recurrent neural network (RNN).

CITATION LIST

PATENT DOCUMENT

Patent Document 1: Japanese Patent Application Laid-Open No. 2020-46833

SUMMARY OF THE INVENTION

PROBLEMS TO BE SOLVED BY THE INVENTION

However, feedback in an RNN or the like is generally performed locally. Furthermore, in a case where input information is large, the calculation amount tends to be large.

SOLUTIONS TO PROBLEMS

According to an aspect of the present disclosure, there is provided an information processing device including a processing unit that executes processing using a neural network, in which the processing unit performs feedback related to a plurality of function parameters respectively used in a plurality of intermediate layers in the neural network on the basis of an output from the intermediate layers.

Furthermore, according to another aspect of the present disclosure, there is provided an information processing method including executing, by a processor, processing using a neural network, in which executing the processing further includes performing feedback related to a plurality of function parameters respectively used in a plurality of intermediate layers in the neural network on the basis of an output from the intermediate layers.

Furthermore, according to another aspect of the present disclosure, there is provided a program for causing a computer to function as an information processing device including a processing unit that executes processing using a neural network, in which the processing unit performs feedback related to a plurality of function parameters respectively used in a plurality of intermediate layers in the neural network on the basis of an output from the intermediate layers.

BRIEF DESCRIPTION OF DRAWINGS

Fig. 1 is a diagram for describing feedback in a processing unit 210 according to one embodiment of the present disclosure.
Fig. 2 is a diagram for describing feedback in the processing unit 210 according to the embodiment.
Fig. 3 is a block diagram illustrating an exemplary configuration of a system 1 according to the embodiment.
Fig. 4 is a diagram illustrating an exemplary structure for implementing feedback of function parameters according to the embodiment.
Fig. 5 is a diagram illustrating an exemplary structure for implementing feedback of the function parameters according to the embodiment.
Fig. 6 is a diagram illustrating an exemplary structure for implementing feedback of the function parameters according to the embodiment.
Fig. 7 is a diagram for describing initial value setting of the function parameters by parameter setters 220 according to the embodiment.
Fig. 8 is a diagram for describing initial value setting of a latent variable y by one of the parameter setters 220 according to the embodiment.

Fig. 9 is a flowchart for describing learning using a search algorithm according to the embodiment.

Fig. 10 is a diagram for describing reinforcement learning according to the embodiment.

Fig. 11 is a diagram illustrating an exemplary structure in a case where the processing unit 210 according to the embodiment feeds back parameters used in kernel functions.

Fig. 12 is a diagram illustrating an exemplary structure in a case where the processing unit 210 according to the embodiment feeds back parameters used in activation functions.

Fig. 13 is a diagram for describing an overview of feedback of processing parameters according to the embodiment.

Fig. 14 is a diagram for describing a specific example of the processing parameters according to the embodiment.

Fig. 15 is a diagram for describing feedback in a case where input information according to the embodiment is non-time-series data.

Fig. 16 is a diagram illustrating an exemplary structure in a case where the processing unit 210 according to the embodiment uses two feedback functions G.

Fig. 17 is a diagram for describing an example of determining processing contents based on a processing parameter according to the embodiment.

Fig. 18 is a diagram for describing an example of determining presence or absence of processing based on a processing parameter according to the embodiment.

Fig. 19 illustrates an exemplary hardware configuration of an information processing device 90 according to one embodiment of the present disclosure.

Fig. 20 is a diagram for describing feedback in a general RNN.

Fig. 21 is a diagram for describing feedback in the general RNN.

MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted by the same reference numerals, and redundant description is omitted.

Note that the description will be given in the following order.

1. Embodiment

    1.1. Overview
    1.2. Exemplary system configuration
    1.3. Details of feedback control

2. Exemplary hardware configuration
3. Summary

<1. Embodiment>

<<1.1. Overview>>

First, an overview of one embodiment of the present disclosure will be described.

A neural network may be provided with a feedback circuit in addition to a feedforward circuit in order to improve the accuracy of processing such as recognition.

An example of the neural network including the feedback circuit includes an RNN.

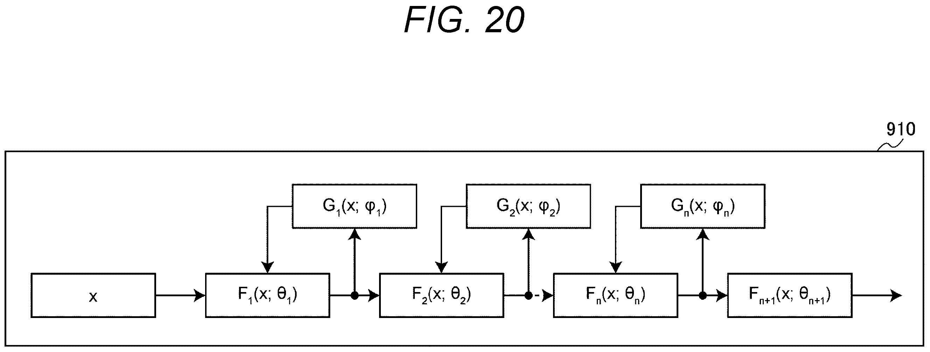

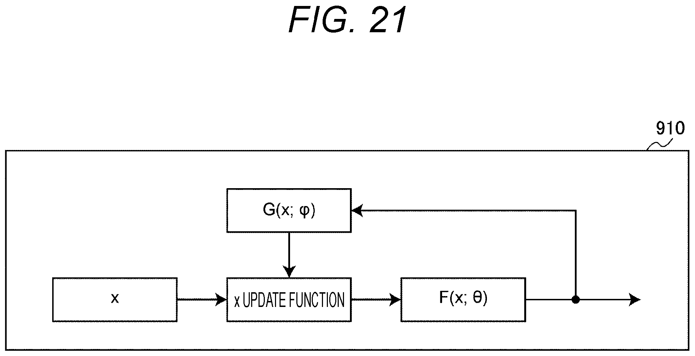

Figs. 20 and 21 are diagrams for describing feedback in a general RNN.

Fig. 20 illustrates an exemplary structure of a processing unit 910 using the general RNN. In the case of the example illustrated in Fig. 20, the processing unit 910 includes the RNN having n intermediate layers. In each intermediate layer, input information x is converted by one of feature-amount conversion functions F.

Furthermore, an output from each intermediate layer is input to one of feedback functions G, and feedback to the same intermediate layer is performed.

For example, in the first intermediate layer from the input layer side, a feature-amount conversion function $F_1$ converts the input input information x by using a function parameter $\theta_1$.

At this time, the input information x converted by the feature-amount conversion function $F_1$ is input to a feature-amount conversion function $F_2$ in the second intermediate layer from the input layer side, and is also input to a feedback function $G_1$.

The feature-amount conversion function $F_2$ to a feature-amount conversion function $F_n$ also convert the input information x using function parameters $\theta_2$ to $\theta_n$, respectively, and the input information x after the conversion is input to the next layer and feedback functions $G_2$ to $G_n$, respectively.

Furthermore, as illustrated in Fig. 21, an output from each of the feedback functions G is input to an x update function, and the input information x updated by the x update function is fed back to a corresponding one of the intermediate layers.

As described above, in the general RNN, feedback using an output from an intermediate layer is locally performed on the same layer, and thus each intermediate layer cannot perform feature amount conversion based on a feature amount converted in a subsequent layer.

Furthermore, in a case where feedback is performed for each intermediate layer, the calculation amount increases. The increase in the calculation amount is more remarkable in a case where the input information x is large data such as an image.

The technical idea according to the present disclosure has been conceived focusing on the above points, and implements highly efficient and highly accurate feedback with the calculation amount suppressed.

Therefore, one of the features of a processing unit 210 according to the one embodiment of the present disclosure is to perform feedback related to a plurality of function parameters respectively used in a plurality of intermediate layers in a neural network on the basis of an output from the intermediate layers.

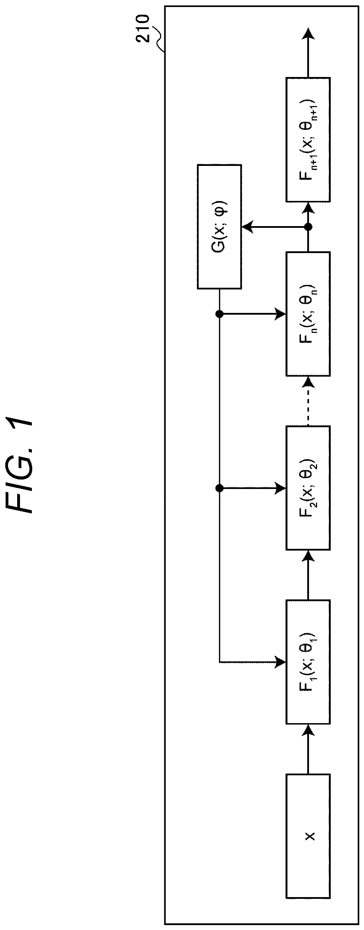

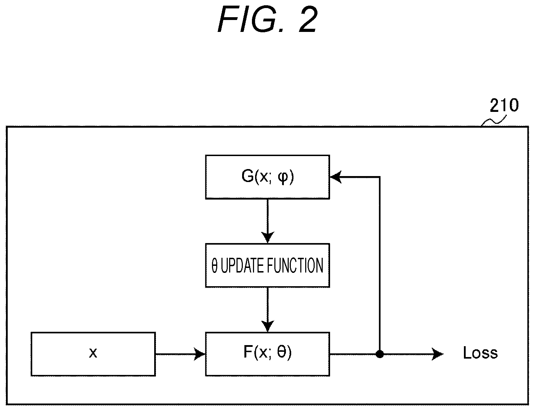

Figs. 1 and 2 are diagrams for describing feedback in the processing unit 210 according to the one embodiment of the present disclosure.

Fig. 1 illustrates an exemplary structure of the processing unit 910 according to the present embodiment. In the case of the example illustrated in Fig. 1, the processing unit 210 includes a neural network having n intermediate layers. In each intermediate layer, similarly to the general RNN illustrated in Fig. 20, input information x is converted by one of feature-amount conversion functions F.

Meanwhile, in the processing unit 210 according to the present embodiment, unlike the general RNN, one feedback function G is provided for a plurality of intermediate layers.

For example, in the case of the example illustrated in Fig. 1, the feedback function G performs calculation based on the input information x converted by a feature-amount conversion function $F_n$ and a function parameter $\phi$. Furthermore, feedback based on a result of the calculation is returned to each of a feature-amount conversion function $F_1$ to the feature-amount conversion function $F_n$.

According to the feedback method as described above, the feature-amount conversion function $F_1$ and the feature-amount conversion function $F_1$ can perform calculation in consideration of a feature amount of a subsequent stage. Furthermore, providing one feedback function G for a plurality of intermediate layers makes it possible to greatly reduce the calculation amount.

Moreover, in the feedback method according to the present embodiment, as illustrated in Fig. 2, for example, feedback related to a function parameter $\theta$ used by the feature-amount conversion function F is performed.

A $\theta$ update function updates the function parameter $\theta$ on the basis of an output from the feedback function G, and the updated function parameter is fed back to the feature-amount conversion function F.

According to the feedback method according to the present embodiment, the possibility of obtaining a more accurate solution is improved as compared with the case of feeding back the input information x.

Furthermore, in many cases, the data amount of the function parameters is smaller than the input information x, and thus the calculation amount can be effectively reduced.

Moreover, a feedback circuit according to the present embodiment can arbitrarily set execution or non-execution. Therefore, for example, in a case where it is not necessary to update the function parameters, turning off the feedback circuit makes it possible to reduce the calculation amount and improve the calculation speed.

<<1.2. Exemplary system configuration>>

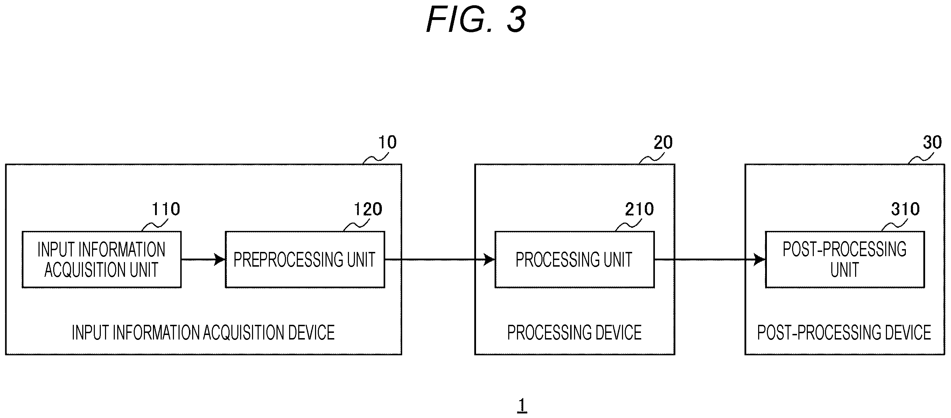

Next, an exemplary configuration of a system 1 in the present embodiment will be described. Fig. 3 is a block diagram illustrating the exemplary configuration of the system 1 according to the present embodiment.

As illustrated in Fig. 3, the system 1 according to the present embodiment may include an input information acquisition device 10, a processing device 20, and a post-processing device 30.

(Input information acquisition device 10)

The input information acquisition device 10 according to the present embodiment is a device that acquires input information input to the neural network included in the processing unit 210.

As illustrated in Fig. 3, the input information acquisition device 10 according to the present embodiment may include an input information acquisition unit 110 and a preprocessing unit 120.

(Input information acquisition unit 110)

The input information acquisition unit 110 according to the present embodiment acquires input information input to the neural network.

For this purpose, the input information acquisition unit 110 according to the present embodiment includes a sensor or the like corresponding to the type of input information to be used.

(Preprocessing unit 120)

The preprocessing unit 120 according to the present embodiment performs preprocessing on the input information prior to input to the neural network.

The preprocessing is only required to be appropriately designed according to the type of the input information, the specifications of the system 1, or the like.

Specific examples of the input information and the preprocessing according to the present embodiment will be described later.

(Processing device 20)

The processing device 20 according to the present embodiment is an information processing device that performs processing such as recognition and prediction using the neural network.

As illustrated in Fig. 3, the processing device 20 according to the present embodiment includes at least the processing unit 210.

(Processing unit 210)

The processing unit 210 according to the present embodiment performs processing such as recognition and prediction using the neural network. Furthermore, one of the features of the processing unit 210 according to the present embodiment is to perform feedback related to a plurality of function parameters respectively used in a plurality of intermediate layers in the neural network on the basis of an output from the intermediate layers.

Details of the feedback performed by the processing unit 210 according to the present embodiment will be separately described.

(Post-processing device 30)

The post-processing device 30 according to the present embodiment is a device that performs some sort of processing (post-processing) based on a result of processing by the processing unit 210.

As illustrated in Fig. 3, the post-processing device 30 according to the present embodiment includes at least a post-processing unit 310.

(Post-processing unit 310)

The post-processing unit 310 according to the present embodiment performs post-processing based on a result of processing by the processing unit 210.

The post-processing is only required to be appropriately designed according to processing contents of the processing unit 210, the specifications of the system 1, or the like.

For example, in a case where the processing unit 210 performs object recognition using the neural network, the post-processing unit 310 may execute, as post-processing, notification or machine control based on a result of the object recognition.

The exemplary configuration of the system 1 according to the present embodiment has been described above. Note that the configuration illustrated in Fig. 3 is merely an example, and the configuration of the system 1 according to the present embodiment is not limited to such an example.

For example, each of the input information acquisition device 10, the processing device 20, and the post-processing device 30 may further include an operation unit that receives an operation by a user, a display unit that displays information, and the like.

Furthermore, for example, the functions of the input information acquisition device 10, the processing device 20, and the post-processing device 30 described above may be implemented in a single device.

The configuration of the system 1 according to the present embodiment can be flexibly modified according to specifications, operations, and the like.

<<1.3. Details of feedback control>

Next, feedback control according to the present embodiment will be described in more detail.

As described above, one of the features of the processing unit 210 according to the present embodiment is to perform feedback related to function parameters used in intermediate layers instead of the input information x.

Several patterns are conceivable in a structure for implementing the feedback related to the function parameters.

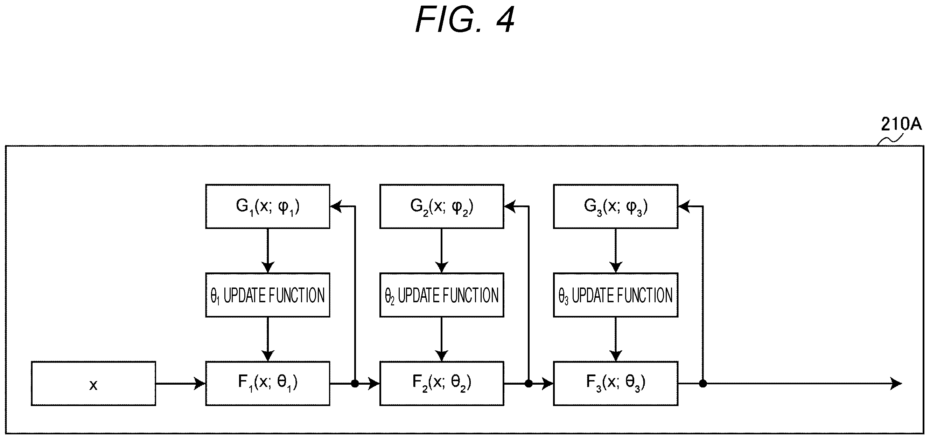

For example, as in a processing unit 210A illustrated in Fig. 4, it is also possible to provide a feedback function $G_1$ to a feedback function $G_3$ respectively corresponding to the feature-amount conversion function $F_1$ to a feature-amount conversion function $F_3$ used in the individual intermediate layers.

In this case, a $\theta_1$ update function to a $\theta_3$ update function update a function parameter $\theta_1$ to a function parameter $\theta_3$ on the basis of outputs from the feedback function $G_1$ to the feedback function $G_3$, respectively, and perform feedback to the feature-amount conversion function $F_1$ to the feature-amount conversion function $F_3$.

However, in this case, although the calculation amount can be reduced as compared with the case where the input information x is fed back, there is a possibility that the accuracy of processing is lowered by the latest conversion result being locally fed back.

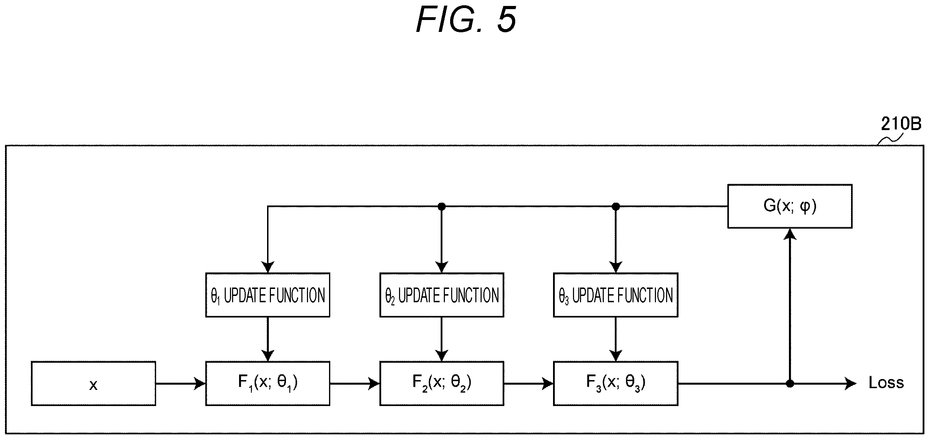

Meanwhile, a processing unit 210B illustrated in Fig. 5 has the single feedback function G for the feature-amount conversion function $F_1$ to the feature-amount conversion function $F_3$ used in the individual intermediate layers.

In this case, reducing the number of feedback functions G makes it possible to further reduce the calculation amount. Furthermore, it is expected that feedback based on a result of feature amount conversion in a subsequent stage can be performed on the feature-amount conversion function $F_1$ and the feature-amount conversion function $F_3$, and the accuracy of processing is improved.

However, in a case where the structure illustrated in Fig. 5 is adopted, feedback control may be difficult.

In order to eliminate the difficulty of the feedback control as described above, the processing unit 210 according to the present embodiment may update a latent variable on the basis of an output from the intermediate layers in the neural network and update the function parameters on the basis of the updated latent variable.

More specifically, the processing unit 210 according to the present embodiment may execute update of the function parameters based on the updated latent variable and update of the latent variable based on the updated function parameters in order from an intermediate layer closer to the input layer side.

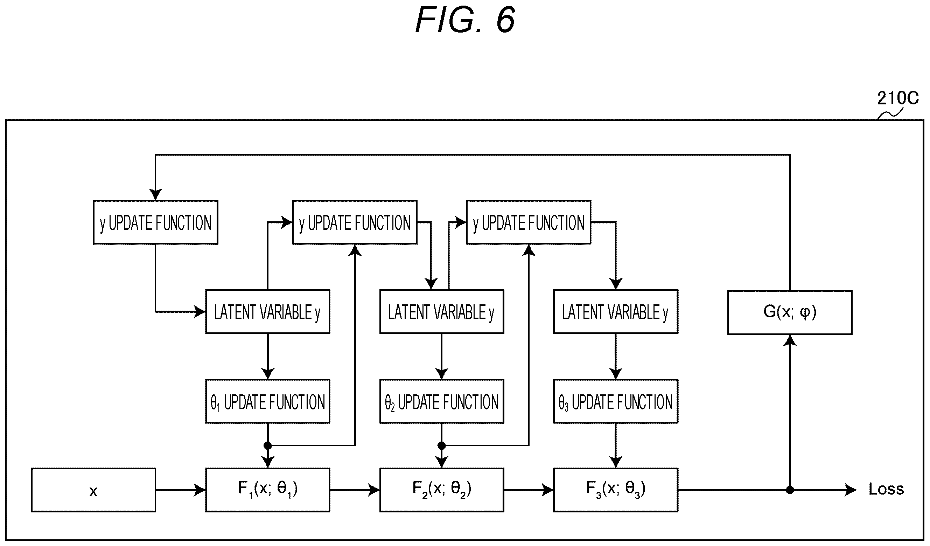

For example, in the case of a processing unit 210C illustrated in Fig. 6, first, a y update function updates a latent variable y on the basis of an output from the feedback function G.

Next, the $\theta_1$ update function updates the function parameter $\theta_1$ on the basis of the latent variable y updated as described above.

Subsequently, the y update function updates the latent variable y on the basis of the function parameter $\theta_1$ updated by the $\theta_1$ update function.

A $\theta_2$ update function updates a function parameter $\theta_2$ on the basis of the latent variable y updated on the basis of the function parameter $\theta_1$.

Subsequently, the y update function updates the latent variable y on the basis of the function parameter $\theta_2$ updated by the $\theta_2$ update function.

The $\theta_3$ update function updates the function parameter $\theta_3$ on the basis of the latent variable y updated on the basis of the function parameter $\theta_2$.

As described above, it is expected that dimensions of data are reduced by use of the latent variable y, and the feedback control is easier.

Note that Fig. 6 illustrates a case where feedback of the function parameter $\theta_1$ to the function parameter $\theta_3$ respectively used in the feature-amount conversion function $F_1$ to the feature-amount conversion function $F_3$ in the first to third layers is performed on the basis of the output from the feature-amount conversion function $F_3$ in the third layer.

However, the feedback targets illustrated in Fig. 6 are merely examples.

For example, the feedback based on the output from the feature-amount conversion function $F_3$ in the third layer may target the feature-amount conversion function $F_1$ and a feature-amount conversion function $F_2$ in the first layer and the second layer.

Meanwhile, the feedback based on the output from the feature-amount conversion function $F_3$ in the third layer may target the feature-amount conversion function $F_1$ and the feature-amount conversion function $F_3$ in the first layer and the third layer.

Meanwhile, the feedback based on the output from the feature-amount conversion function $F_3$ in the third layer may target the feature-amount conversion function $F_2$ and the feature-amount conversion function $F_3$ in the second layer and the third layer.

As described above, the feedback targets according to the present embodiment can be arbitrarily and flexibly designed.

Next, a learning method according to the present embodiment will be described with specific examples.

The processing unit 210 according to the present embodiment may perform learning by a gradient method using parameter setters 220, for example.

For example, in a case where the input information x is time-series data, the parameter setters 220 according to the present embodiment may set initial values of the function parameters at the start of new learning on the basis of the function parameters updated on the basis of inputs of the second and subsequent frames of the input information x in past learning using the input information x.

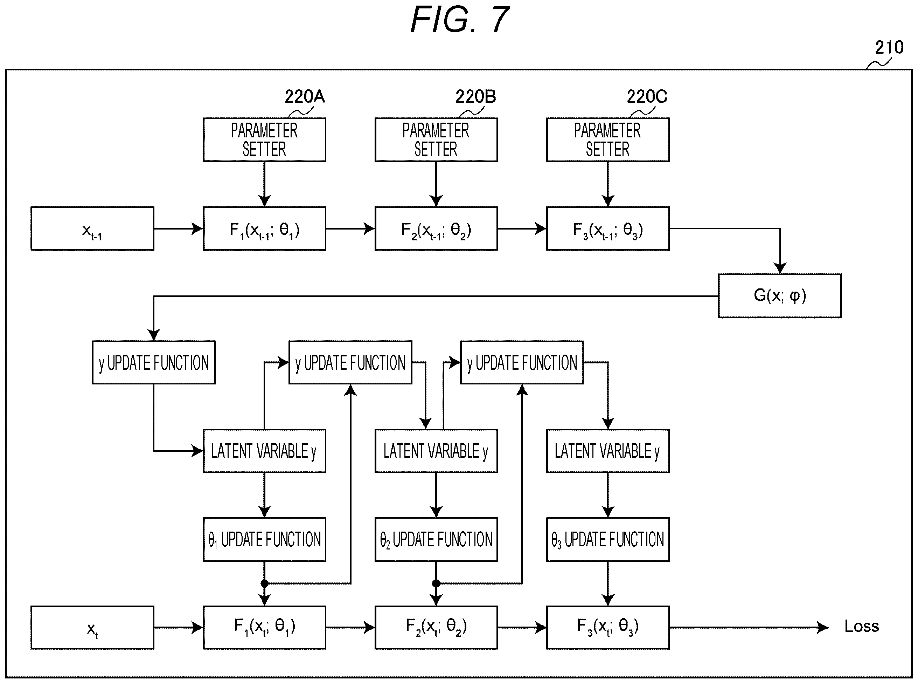

Fig. 7 is a diagram for describing initial value setting of the function parameters by the parameter setters 220 according to the present embodiment.

Fig. 7 illustrates a case where the input information x is time-series data, and function parameters used for conversion of input information $x_t$ of the second frame and subsequent input information are updated on the basis of a conversion result of input information $x_{t-1}$ of the first frame.

As described above, in a case of performing learning using time-series data of two or more frames as the input information x, the parameter setters 220 may set function parameters used for conversion of the input information $x_{t-1}$ of the first frame.

In the case of the example illustrated in Fig. 7, a parameter setter 220A to a parameter setter 220C set the function parameter $\theta_1$ to the function parameter $\theta_3$, respectively.

At this time, each of the parameter setter 220A to the parameter setter 220C may perform the above setting on the basis of the function parameter $\theta_1$ to the function parameter $\theta_3$ updated in the second and subsequent frames stored in past learning.

For example, each of the parameter setter 220A to the parameter setter 220C may set a value randomly selected from among the function parameters $\theta$ used in the past, or may set a calculated moving average, a value obtained by adding noise to the moving average, or the like.

Furthermore, a parameter setter may set an initial value of the latent variable y in the first frame.

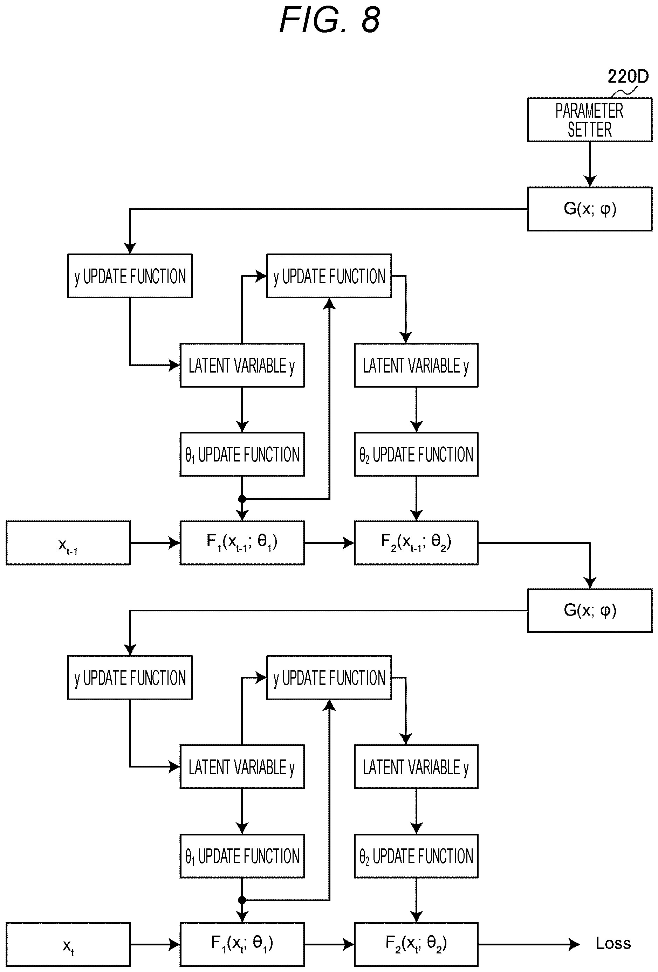

Fig. 8 is a diagram for describing initial value setting of the latent variable y by one of the parameter setters 220 according to the present embodiment.

Fig. 8 illustrates a case where the input information x is time-series data, and the function parameters and the latent variable y used for conversion of the input information $x_t$ of the second frame and the subsequent input information are updated on the basis of a conversion result of the input information $x_{t-1}$ of the first frame.

As described above, in a case of performing learning using time-series data of two or more frames as the input information x, as illustrated in Fig. 8, a parameter setter 220D may set the initial value of the latent variable y used for conversion of the input information $x_{t-1}$ of the first frame.

At this time, the parameter setter 220D may perform the above setting on the basis of the latent variable y updated in the second and subsequent frames stored in past learning.

For example, the parameter setter 220D may set a value randomly selected from among the latent variables y used in the past, or may set an average value, a median value, or the like.

Next, learning using a search algorithm according to the present embodiment will be described. For example, the processing unit 210 according to the present embodiment may perform learning using a search algorithm as necessary while using the gradient method as a basis.

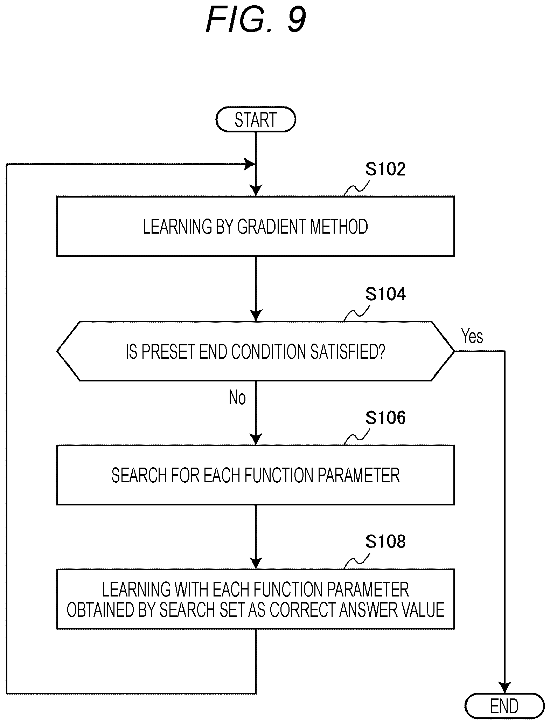

Fig. 9 is a flowchart for describing the learning using the search algorithm according to the present embodiment.

In the case of the example illustrated in Fig. 9, the processing unit 210 first performs learning by the gradient method (S102).

Here, in a case where the learning by the gradient method in step S102 satisfies a preset end condition (S104: Yes), the processing unit 210 may end the learning.

On the other hand, in a case where the learning by the gradient method in step S102 does not satisfy the preset end condition (S104: No), the processing unit 210 searches for each function parameter by the search algorithm (S106).

Next, the processing unit 210 performs further learning with each function parameter obtained in step S106 set as a correct answer value (grand truth) (S108).

After the processing in step S108, the processing unit 210 returns to step S102 and repeatedly executes the processing in steps S102 to S108 until the preset end condition is satisfied.

The learning using the search algorithm as described above is particularly effective, for example, in a situation where an optimal control system cannot be implemented only by the gradient method.

Furthermore, even in a case where a local solution is obtained in the learning by the gradient method, learning is performed with each function parameter obtained by the search algorithm set as a correct answer value, so that the feedback circuit can escape from the local solution.

Furthermore, by repeating the entire learning by the gradient method and the learning of a feedback portion with the search result set as a correct answer value, it is possible to achieve the entire optimization in end-to-end while avoiding obtaining a local solution.

Note that, instead of setting each function parameter obtained by the search algorithm as a correct answer value, the processing unit 210 may perform learning with a loss of design in which a feature amount of an output in the feature-amount conversion function $F_1$, the feature-amount conversion function $F_3$, or a subsequent stage matches a feature amount in the case of using the correct answer value obtained by the search algorithm.

In a case where there is a plurality of sets of control outputs $\{\theta_1, \theta_2, \theta_3\}$ that achieve the same output, there is a possibility that the learning using the loss as described above improves the accuracy.

Meanwhile, the processing unit 210 according to the present embodiment can learn the correspondence between an output from the intermediate layers in the neural network and a combination of a plurality of function parameters by reinforcement learning.

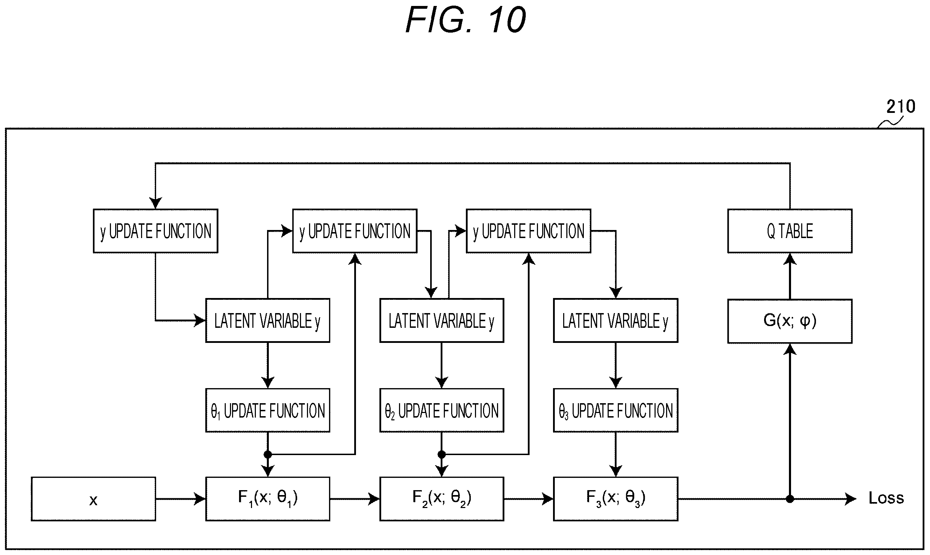

Fig. 10 is a diagram for describing reinforcement learning according to the present embodiment. For example, in a case where Q learning is adopted, the processing unit 210 includes a Q table as illustrated in Fig. 10.

In the Q table, the input information x input to the feedback function G and a set of control output solutions $\{\theta_1, \theta_2, \theta_3\}$ for the input information x are stored in association with each other.

Note that the processing unit 210 may update the Q table as the latent variable y = Q table.

According to the reinforcement learning as described above, it is possible to set the function parameters $\theta$ more suitable for the input information x.

Next, the function parameters according to the present embodiment will be described with specific examples.

The function parameters according to the present embodiment may be, for example, parameters used in kernel functions.

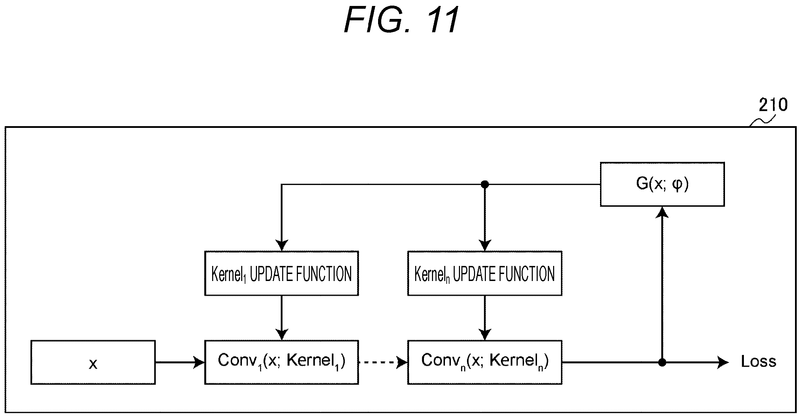

Fig. 11 is a diagram illustrating an exemplary structure in a case where the processing unit 210 according to the present embodiment feeds back parameters used in kernel functions.

For example, each kernel update function according to the present embodiment may feed back all kernel values on the basis of an output from the feedback function G. In this case, although the calculation amount increases, feedback with a high degree of freedom can be implemented.

Furthermore, for example, each kernel update function according to the present embodiment may perform feedback of multiplying the original kernel by a constant for each channel. In this case, it is possible to implement feedback focusing on a specific layer with the calculation amount suppressed.

Furthermore, for example, each kernel update function according to the present embodiment may perform feedback of multiplying the original kernel by a constant. In this case, the calculation amount is further reduced, and the reaction degree of neuro can be adjusted.

Furthermore, for example, each kernel update function according to the present embodiment can feed back not only the kernel but also a bias.

According to the feedback for finely correcting the original kernel and bias as described above, an effect of reducing the calculation amount and facilitating learning is expected.

Moreover, performing feedback to a convolution layer makes it possible to implement precise control as compared with control of feeding back a feature amount, which causes a large calculation amount.

Furthermore, the function parameters according to the present embodiment may be, for example, parameters used in activation functions.

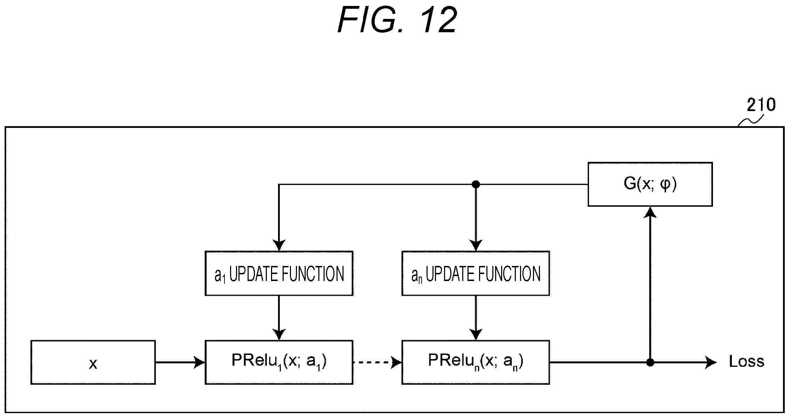

Fig. 12 is a diagram illustrating an exemplary structure in a case where the processing unit 210 according to the present embodiment feeds back parameters used in activation functions.

Note that Fig. 12 illustrates an example of a case where the processing unit 210 feeds back parameters a used in Prelu functions.

In this case, each of the parameters a may be updated by any of the following calculations.

```
(1) a = ideal fixed value × feedback value

(2) a = ideal fixed value + feedback value

(3) a = learnable parameter × feedback value

(4) a = learnable parameter + feedback value

(5) a = feedback value
```

Furthermore, the processing unit 210 can also perform feedback not for each set of input information x but for each feature amount. In this case, a non-uniform distribution in the input information x (for example, a bright portion and a dark portion exist in an image) can be corrected.

The feedback of the function parameters according to the present embodiment has been described above with specific examples.

Next, feedback of processing parameters according to the present embodiment will be described.

The processing unit 210 according to the present embodiment may further perform acquisition of input information to be input to the neural network or feedback related to processing parameters used for processing the input information.

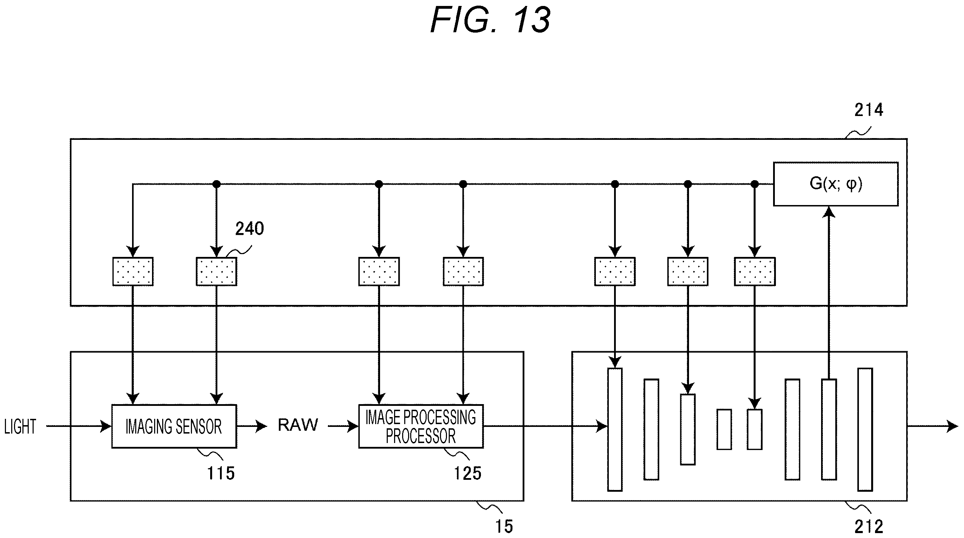

Fig. 13 is a diagram for describing an overview of feedback of the processing parameters according to the present embodiment. Fig. 13 illustrates an exemplary structure in a case where the input information according to the present embodiment is image information, and the processing unit 210 performs recognition based on the image information.

A camera 15 illustrated in Fig. 13 is an example of the input information acquisition device 10 illustrated in Fig. 3. The camera 15 includes an imaging sensor 115, which is an example of the input information acquisition unit 110, and an image processing processor (image signal processor: ISP) 125, which is an example of the preprocessing unit 120.

RAW data (input information) captured by the imaging sensor 115 is input to the image processing processor 125, and is subjected to image processing (an example of preprocessing according to the present embodiment) by the image processing processor 125.

Furthermore, the input information subjected to the image processing by the image processing processor 125 is input to a neural network 212 included in the processing unit 210.

In a feedback circuit 214 included in the processing unit 210, the feedback function G performs calculation based on an output from an intermediate layer of the neural network and outputs a calculation result to a plurality of parameter functions 240 indicated by dots.

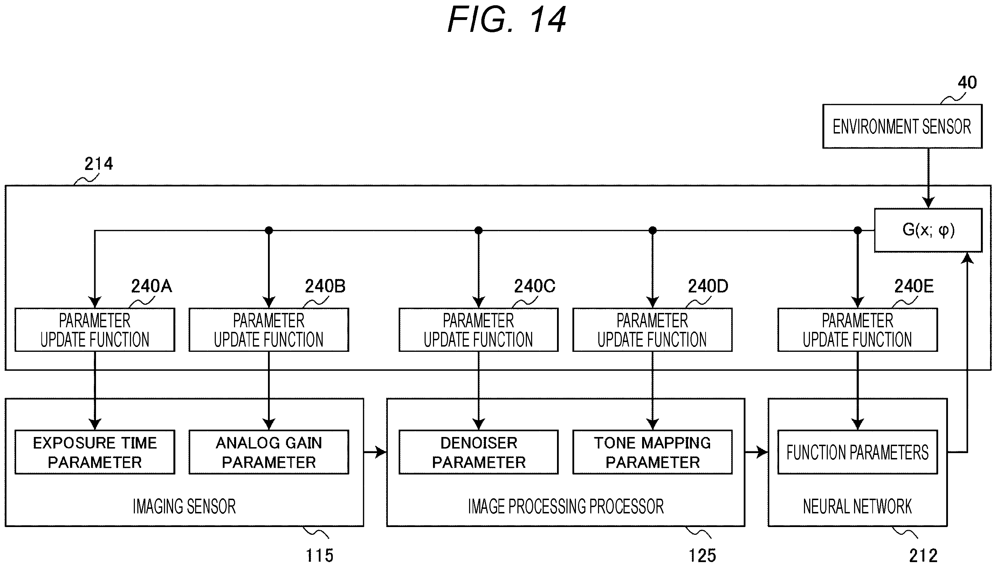

Fig. 14 is a diagram for describing a specific example of the processing parameters according to the present embodiment.

The processing parameters according to the present embodiment may be, for example, parameters used by the imaging sensor 115 that acquires image information.

In the case of the example illustrated in Fig. 14, a parameter update function 240A updates a parameter related to exposure time on the basis of an output from the feedback function G.

Furthermore, a parameter update function 240B updates a parameter related to an analog gain on the basis of the output from the feedback function G.

Furthermore, the processing parameters according to the present embodiment may be, for example, parameters used by the image processing processor 125 that processes image information.

In the case of the example illustrated in Fig. 14, a parameter update function 240C updates a parameter related to a denoiser on the basis of the output from the feedback function G.

Furthermore, a parameter update function 240D updates a parameter related to tone mapping on the basis of the output from the feedback function G.

Note that a parameter update function 240E updates the above-described function parameters on the basis of the output from the feedback function G.

According to the feedback of the processing parameters as described above, even in a case where the accuracy of recognition processing is not improved only by the feedback of the function parameters to the neural network 212, controlling the entire recognition pipeline (acquisition, processing, and recognition of image information) makes it possible to improve the recognition accuracy.

Furthermore, according to the feedback of the processing parameters as described above, the processing load of the neural network 212 is reduced, and even a light model that may be a bottleneck of calculation can ensure predetermined recognition accuracy.

Furthermore, as illustrated in Fig. 14, the processing unit 210 according to the present embodiment may control feedback related to both or any of the function parameters and the processing parameters further on the basis of environment information sensed by an environment sensor 40.

The environment information may include, for example, illuminance, temperature, humidity, weather, time, position information, and the like.

As described above, the feedback circuit 214 according to the present embodiment can arbitrarily switch execution or non-execution of feedback. The switching of the execution or non-execution of feedback may be set on the basis of, for example, time (for example, every hour or the like) or may be set by an instruction from a user.

Meanwhile, the processing unit 210 according to the present embodiment may determine whether or not to execute feedback related to both or any of the function parameters and the processing parameters on the basis of the environment information.

For example, the processing unit 210 may perform control such that feedback is executed in a case where a predetermined environmental change is detected (for example, it gets dark, it starts to rain, or the humidity increases).

According to the control as described above, feedback is executed and the parameters are updated only when the feedback is necessary, such as when the model cannot be adapted to the environment, so that it is possible to adapt the model to the environment while the calculation cost in normal times is lowered.

Furthermore, according to the control as described above, it is possible to immediately adapt the model to the environment without relearning.

Furthermore, the processing unit 210 according to the present embodiment may update both or any of the function parameters and the processing parameters on the basis of the environment information.

For example, in a case where it gets dark and it is difficult to perform recognition processing, each parameter update function illustrated in Fig. 14 may perform parameter update as exemplified below.

Parameter update function 240A: Update the parameter so that the exposure time is longer

Parameter update function 240B: Update the parameter so that the gain is larger

Parameter update function 240C: Update the parameter so that denoising is performed more strongly

Parameter update function 240D: Update the parameter so that a dark portion is more emphasized

Parameter update function 240E: Update the parameters so as to be able to cope with a dark image and a noisy image

According to the parameter update based on the environment information as described above, it is possible to perform recognition with higher accuracy according to the situation.

The feedback of the function parameters and the processing parameters according to the present embodiment has been described above with specific examples.

Note that, in the above description, cases where the input information according to the present embodiment is time-series data have been described as main examples, but the input information according to the present embodiment may be, for example, non-time-series data such as a still image.

The processing unit 210 according to the present embodiment can also perform feedback related to a plurality of parameters a plurality of times with respect to the same input information input to the neural network 212.

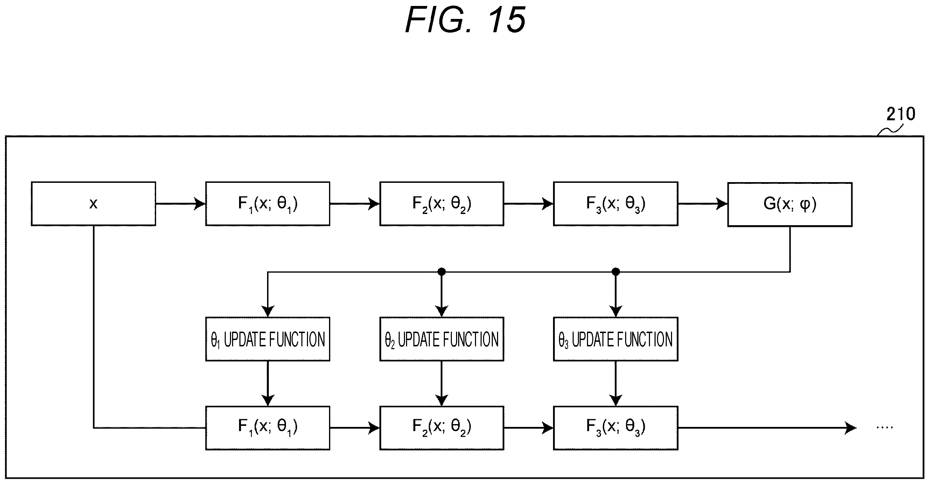

Fig. 15 is a diagram for describing feedback in a case where the input information according to the present embodiment is non-time-series data.

In the case of the example illustrated in Fig. 15, after the input information x is changed by the feature-amount conversion function $F_1$ to the feature-amount conversion function $F_3$, the $\theta_1$ update function to the $\theta_3$ update function update the function parameter $\theta_1$ to the function parameter $\theta_3$, respectively, on the basis of an output from the feedback function G.

Thereafter, the input information x is input again to the feature-amount conversion function $F_1$ to the feature-amount conversion function $F_3$, and conversion using the updated function parameter $\theta_1$ to function parameter $\theta_3$ is performed.

As described above, even in a case where the input information x is non-time-series data, the same input information x is input a plurality of times, so that parameters that cannot be updated by one input are sequentially updated, and a more accurate processing result can be obtained.

Furthermore, in the above description, cases where the processing unit 210 performs feedback to all the intermediate layers included in the neural network 212 by the single feedback function G have been described as main examples.

Meanwhile, the number of feedback functions G according to the present embodiment may be two or more, and grouping of intermediate layers that receive feedback based on an output of the feedback function G can be arbitrarily set.

For example, the processing unit 210 according to the present embodiment may perform feedback related to a plurality of function parameters on the basis of a plurality of intermediate feature amounts.

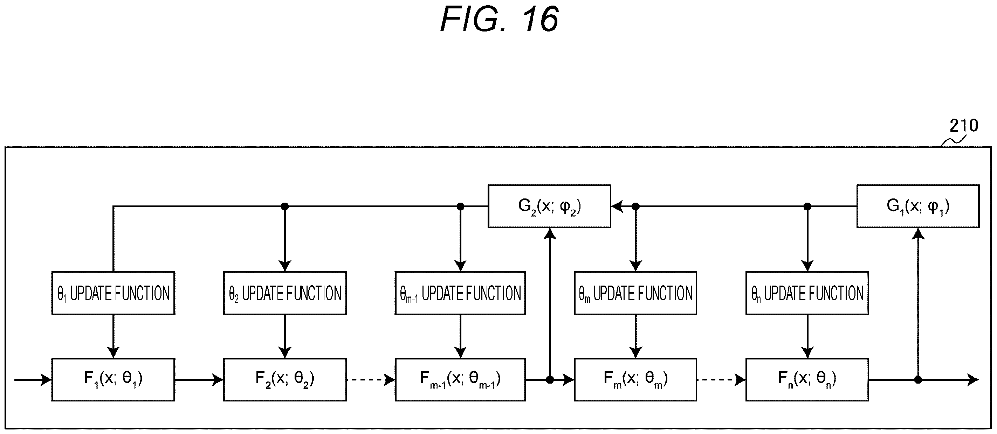

Fig. 16 is a diagram illustrating an exemplary structure in a case where the processing unit 210 according to the present embodiment uses two feedback functions G.

In the case of the example illustrated in Fig. 16, a feedback function $G_1$ performs calculation based on an output from the feature-amount conversion function $F_n$, and outputs a calculation result to a $\theta_m$ update function, a $\theta_n$ update function, and a feedback function $G_2$.

Furthermore, the feedback function $G_2$ performs calculation based on the output from the feedback function $G_1$ and an output from a feature-amount conversion function $F_{m-1}$, and outputs a calculation result to the $\theta_1$ update function to a $\theta_{m-1}$ update function.

As described above, the processing unit 210 according to the present embodiment can implement feedback based on the degrees of reaction in a plurality of intermediate layers.

Furthermore, the feedback control according to the present embodiment is not limited to the update of the parameters.

The function parameters and the processing parameters according to the present embodiment may be used for determining contents of processing using the function parameters or the processing parameters or the presence or absence of processing.

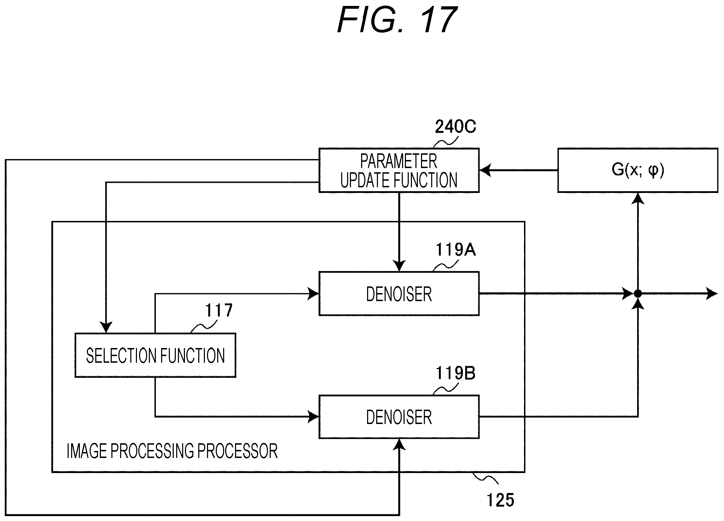

Fig. 17 is a diagram for describing an example of determining processing contents based on a processing parameter according to the present embodiment.

In the case of the example illustrated in Fig. 17, a selection function 117 used by the image processing processor 125 may select which one of a denoiser 119A that performs weak processing and a denoiser 119B that performs strong processing is used on the basis of an output from the parameter update function 240C.

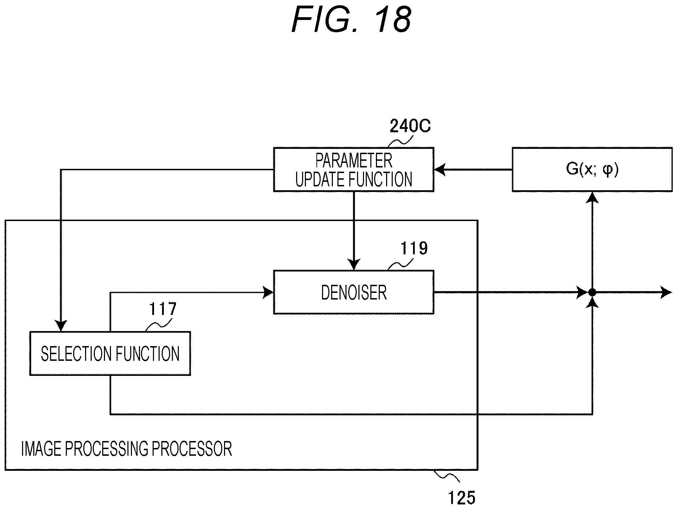

Fig. 18 is a diagram for describing an example of determining the presence or absence of processing based on a processing parameter according to the present embodiment.

In the case of the example illustrated in Fig. 18, the selection function 117 used by the image processing processor 125 may select whether or not to execute processing by a denoiser 119 on the basis of an output from the parameter update function 240C.

As described above, the feedback control according to the present embodiment includes determination of processing contents or presence or absence of processing based on an updated parameter.

Note that the determination control of the processing contents or the presence or absence of processing based on an updated parameter may be combined with the feedback control based on the environment information described above.

Furthermore, in addition to the above combination, the individual controls described in the present disclosure can be arbitrarily combined unless they are alternative controls.

<2. Exemplary hardware configuration>

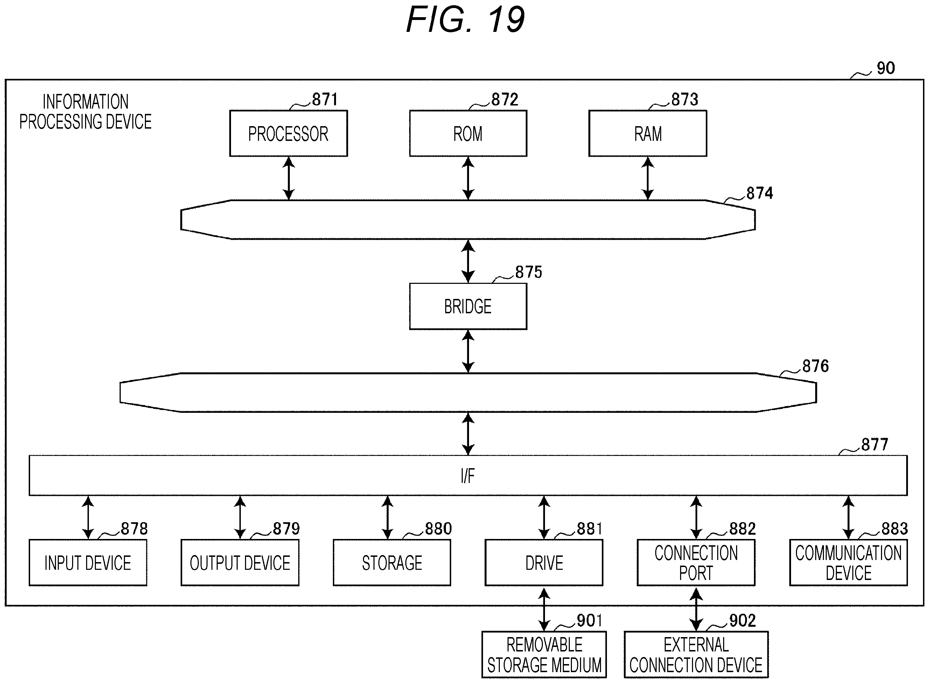

Next, an exemplary hardware configuration of an information processing device 90 according to one embodiment of the present disclosure will be described. Fig. 19 is a block diagram illustrating the exemplary hardware configuration of the information processing device 90 according to the one embodiment of the present disclosure. Note that the information processing device 90 may be a device having a hardware configuration equivalent to that of the processing device 20.

As illustrated in Fig. 19, the information processing device 90 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration illustrated here is an example, and some of the components may be omitted. Furthermore, components other than the components illustrated here may be further included.

(Processor 871)

The processor 871 functions as, for example, an arithmetic processing device or a control device, and controls the overall operation of each component or a part thereof on the basis of various programs recorded in the ROM 872, the RAM 873, the storage 880, or a removable storage medium 901.

(ROM 872, RAM 873)

The ROM 872 is a means for storing a program to be read into the processor 871, data to be used for calculation, and the like. The RAM 873 temporarily or permanently stores, for example, a program to be read into the processor 871, various parameters that appropriately change when the program is executed, and the like.

(Host bus 874, bridge 875, external bus 876, interface 877)

The processor 871, the ROM 872, and the RAM 873 are mutually connected via, for example, the host bus 874 capable of high-speed data transmission. Meanwhile, the host bus 874 is connected to the external bus 876 having a relatively low data transmission speed via the bridge 875, for example. Furthermore, the external bus 876 is connected to various components via the interface 877.

(Input device 878)

As the input device 878, for example, a mouse, a keyboard, a touch panel, a button, a switch, a lever, and the like are used. Moreover, as the input device 878, a remote controller (hereinafter referred to as a remote) capable of transmitting a control signal using infrared rays or other radio waves may be used. Furthermore, the input device 878 includes a voice input device such as a microphone.

(Output device 879)

The output device 879 is a device capable of visually or auditorily notifying a user of acquired information, such as a display device such as a cathode ray tube (CRT), an LCD, or an organic EL, an audio output device such as a speaker or a headphone, a printer, a mobile phone, or a facsimile, for example. Furthermore, the output device 879 according to the present disclosure includes various vibration devices capable of outputting a haptic stimulus.

(Storage 880)

The storage 880 is a device for storing various types of data. As the storage 880, for example, a magnetic storage device such as a hard disk drive (HDD), a semiconductor storage device, an optical storage device, a magneto-optical storage device, or the like is used.

(Drive 881)

The drive 881 is, for example, a device that reads information recorded in the removable storage medium 901 such as a magnetic disk, an optical disk, a magneto-optical disk, or a semiconductor memory, or writes information in the removable storage medium 901.

(Removable storage medium 901)

The removable storage medium 901 is, for example, a DVD medium, a Blu-ray (registered trademark) medium, an HD DVD medium, various semiconductor storage media, or the like. It is needless to say that the removable storage medium 901 may be, for example, an IC card on which a non-contact IC chip is mounted, an electronic device, or the like.

(Connection port 882)

The connection port 882 is a port for connecting an external connection device 902, such as a universal serial bus (USB) port, an IEEE 1394 port, a small computer system interface (SCSI), an RS-232C port, or an optical audio terminal, for example.

(External connection device 902)

The external connection device 902 is, for example, a printer, a portable music player, a digital camera, a digital video camera, an IC recorder, or the like.

(Communication device 883)

The communication device 883 is a communication device for connecting to a network, and is, for example, a communication card for a wired or wireless LAN, Bluetooth (registered trademark), or wireless USB (WUSB), a router for optical communication, a router for asymmetric digital subscriber line (ADSL), a modem for various types of communication, or the like.

<3. Summary>

As described above, the processing unit 210 that executes processing using a neural network according to one embodiment of the present disclosure is provided. Furthermore, one of the features of the processing unit 210 is to perform feedback related to a plurality of function parameters respectively used in a plurality of intermediate layers in the neural network on the basis of an output from the intermediate layers.

According to the above configuration, it is possible to implement highly efficient and highly accurate feedback with the calculation amount suppressed.

Although the preferred embodiments of the present disclosure have been described above in detail with reference to the accompanying drawings, the technical scope of the present disclosure is not limited to such examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, a series of processing performed by each device described in the present disclosure may be implemented by a program stored in a non-transitory computer readable storage medium. For example, each program is read into the RAM when a computer executes the program, and is executed by a processor such as a CPU. The storage medium is, for example, a magnetic disk, an optical disk, a magneto-optical disk, a flash memory, or the like. Furthermore, the program may be distributed via, for example, a network without using a storage medium.

Furthermore, the effects described in the present specification are merely illustrative or exemplary, and are not restrictive. That is, the technology according to the present disclosure can provide other effects that are apparent to those skilled in the art from the description of the present specification, in combination with or instead of the effects described above.

Note that the following configurations also belong to the technical scope of the present disclosure.

(1) An information processing device including

a processing unit that executes processing using a neural network, in which
the processing unit performs feedback related to a plurality of function parameters respectively used in a plurality of intermediate layers in the neural network on the basis of an output from the intermediate layers.

(2) The information processing device according to (1), in which
the processing unit updates a latent variable on the basis of an output from the intermediate layers in the neural network, and updates the function parameters on the basis of the updated latent variable.

(3) The information processing device according to (2), in which
the processing unit executes update of the function parameters based on the updated latent variable and update of the latent variable based on the updated function parameters in order from an intermediate layer closer to an input layer side.

(4) The information processing device according to any one of (1) to (3), in which

input information input to the neural network is time-series data, and
the processing unit sets initial values of the function parameters at a start of learning on the basis of the function parameters updated on the basis of inputs of second and subsequent frames of the time-series data in past learning using the time-series data.

(5) The information processing device according to any one of (1) to (4), in which
in a case where an end condition is not satisfied in learning by a gradient method, the processing unit performs further learning with each of the function parameters obtained by a search algorithm set as a correct answer value.

(6) The information processing device according to any one of (1) to (4), in which
the processing unit learns a correspondence between an output from the intermediate layers in the neural network and a combination of a plurality of the function parameters by reinforcement learning.

(7) The information processing device according to any one of (1) to (6), in which
the processing unit performs feedback related to a plurality of the function parameters on the basis of a plurality of intermediate feature amounts.

(8) The information processing device according to any one of (1) to (7), in which
the processing unit performs feedback related to a plurality of the function parameters a plurality of times with respect to same input information input to the neural network.

(9) The information processing device according to any one of (1) to (8), in which
the processing unit further performs acquisition of input information input to the neural network or feedback related to processing parameters used for processing the input information.

(10) The information processing device according to (9), in which
the function parameters or the processing parameters are used to determine contents of processing using the function parameters or the processing parameters or presence or absence of processing.

(11) The information processing device according to (9) or (10), in which

the input information input to the neural network is image information, and
the processing parameters are used by an imaging sensor that acquires the image information.

(12) The information processing device according to any one of (9) to (11), in which

the input information input to the neural network is image information, and
the processing parameters are used by an image processing processor that processes the image information.

(13) The information processing device according to any one of (9) to (12), in which

the processing unit controls feedback related to both or any of the function parameters and the processing parameters further on the basis of environment information sensed by an environment sensor.

(14) The information processing device according to (13), in which
the processing unit determines whether or not to execute feedback related to both or any of the function parameters and the processing parameters on the basis of the environment information.

(15) The information processing device according to (13) or (14), in which
the processing unit updates both or any of the function parameters and the processing parameters on the basis of the environment information.

(16) The information processing device according to any one of (1) to (15), in which
the function parameters include a parameter used in a kernel function.

(17) The information processing device according to any one of (1) to (16), in which
the function parameters include a parameter used in an activation function.

(18) An information processing method including

executing, by a processor, processing using a neural network, in which
executing the processing further includes performing feedback related to a plurality of function parameters respectively used in a plurality of intermediate layers in the neural network on the basis of an output from the intermediate layers.

(19) A program for causing a computer to function as

an information processing device including
a processing unit that executes processing using a neural network, in which
the processing unit performs feedback related to a plurality of function parameters respectively used in a plurality of intermediate layers in the neural network on the basis of an output from the intermediate layers.

REFERENCE SIGNS LIST

| | |
|---|---|
| 1 | System |
| 10 | Input information acquisition device |
| 110 | Input information acquisition unit |
| 120 | Preprocessing unit |
| 20 | Processing device |
| 210 | Processing unit |
| 212 | Neural network |
| 214 | Feedback circuit |
| 30 | Post-processing device |
| 310 | Post-processing unit |

**Claims**

1. An information processing device comprising

   a processing unit that executes processing using a neural network, wherein
   the processing unit performs feedback related to a plurality of function parameters respectively used in a plurality of intermediate layers in the neural network on a basis of an output from the intermediate layers.

2. The information processing device according to claim 1, wherein
   the processing unit updates a latent variable on a basis of an output from the intermediate layers in the neural network, and updates the function parameters on a basis of the updated latent variable.

3. The information processing device according to claim 2, wherein
   the processing unit executes update of the function parameters based on the updated latent variable and update of the latent variable based on the updated function parameters in order from an intermediate layer closer to an input layer side.

4. The information processing device according to claim 1, wherein

   input information input to the neural network is time-series data, and
   the processing unit sets initial values of the function parameters at a start of learning on a basis of the function parameters updated on a basis of inputs of second and subsequent frames of the time-series data in past learning using the time-series data.

5. The information processing device according to claim 1, wherein
   in a case where an end condition is not satisfied in learning by a gradient method, the processing unit performs further learning with each of the function parameters obtained by a search algorithm set as a correct answer value.

6. The information processing device according to claim 1, wherein
   the processing unit learns a correspondence between an output from the intermediate layers in the neural network and a combination of a plurality of the function parameters by reinforcement learning.

7. The information processing device according to claim 1, wherein
   the processing unit performs feedback related to a plurality of the function parameters on a basis of a plurality of intermediate feature amounts.

8. The information processing device according to claim 1, wherein
   the processing unit performs feedback related to a plurality of the function parameters a plurality of times with respect to same input information input to the neural network.

9. The information processing device according to claim 1, wherein
   the processing unit further performs acquisition of input information input to the neural network or feedback related to processing parameters used for processing the input information.

10. The information processing device according to claim 9, wherein
    the function parameters or the processing parameters are used to determine contents of processing using the function parameters or the processing parameters or presence or absence of processing.

11. The information processing device according to claim 9, wherein

    the input information input to the neural network is image information, and
    the processing parameters are used by an imaging sensor that acquires the image information.

12. The information processing device according to claim 9, wherein

    the input information input to the neural network is image information, and
    the processing parameters are used by an image processing processor that processes the image information.

13. The information processing device according to claim 9, wherein
    the processing unit controls feedback related to both or any of the function parameters and the processing parameters further on a basis of environment information sensed by an environment sensor.

14. The information processing device according to claim 13, wherein
    the processing unit determines whether or not to execute feedback related to both or any of the function parameters and the processing parameters on a basis of the environment information.

15. The information processing device according to claim 13, wherein
    the processing unit updates both or any of the function parameters and the processing parameters on a basis of the environment information.

16. The information processing device according to claim 1, wherein
    the function parameters include a parameter used in a kernel function.

17. The information processing device according to claim 1, wherein
    the function parameters include a parameter used in an activation function.

18. An information processing method comprising

executing, by a processor, processing using a neural network, wherein
executing the processing further includes performing feedback related to a plurality of function parameters respectively used in a plurality of intermediate layers in the neural network on a basis of an output from the intermediate layers.

19. A program for causing a computer to function as

an information processing device including
a processing unit that executes processing using a neural network, wherein
the processing unit performs feedback related to a plurality of function parameters respectively used in a plurality of intermediate layers in the neural network on a basis of an output from the intermediate layers.

FIG. 1

# FIG. 2

210

G(x; φ)

θ UPDATE FUNCTION

x → F(x; θ) → Loss

## FIG. 3

```
        ┌─────────────────────────────────────┐ 10    ┌──────────────────┐ 20   ┌──────────────────┐ 30
        │                                     │       │                  │      │                  │
        │  ┌──────────────┐ 110 ┌───────────┐ 120    │ ┌──────────────┐ 210  │ ┌──────────────┐ 310
        │  │INPUT INFORMATION│──▶│PREPROCESSING│──────┼▶│PROCESSING UNIT│──────┼▶│POST-PROCESSING│
        │  │ACQUISITION UNIT │   │   UNIT     │       │ └──────────────┘ │    │ │    UNIT      │
        │  └──────────────┘      └───────────┘       │                  │    │ └──────────────┘
        │                                     │       │ PROCESSING DEVICE│    │POST-PROCESSING DEVICE
        │ INPUT INFORMATION ACQUISITION DEVICE│       │                  │    │                  │
        └─────────────────────────────────────┘       └──────────────────┘    └──────────────────┘

                                            1
```

## FIG. 4

FIG. 5

EP 4 475 035 A1

FIG. 6

EP 4 475 035 A1

FIG. 7

EP 4 475 035 A1

# FIG. 8

## FIG. 9

```
                    ( START )
                        │
      ┌─────────────────┤
      │                 │            S102
      │                 ▼          ⌇
      │    ┌─────────────────────────────┐
      │    │  LEARNING BY GRADIENT METHOD │
      │    └─────────────────────────────┘
      │                 │
      │                 │            S104
      │                 ▼          ⌇
      │    ╱─────────────────────────────╲        Yes
      │    ⟨ IS PRESET END CONDITION SATISFIED? ⟩─────┐
      │    ╲─────────────────────────────╱            │
      │                 │                             │
      │                 │ No                          │
      │                 │            S106             │
      │                 ▼          ⌇                  │
      │    ┌─────────────────────────────┐            │
      │    │ SEARCH FOR EACH FUNCTION PARAMETER │     │
      │    └─────────────────────────────┘            │
      │                 │                             │
      │                 │            S108             │
      │                 ▼          ⌇                  │
      │    ┌─────────────────────────────────────┐   │
      │    │ LEARNING WITH EACH FUNCTION PARAMETER │  │
      │    │ OBTAINED BY SEARCH SET AS CORRECT ANSWER VALUE │
      │    └─────────────────────────────────────┘   │
      │                 │                             │
      └─────────────────┘                             ▼
                                                  ( END )
```

FIG. 10

EP 4 475 035 A1

EP 4 475 035 A1

## FIG. 11

210

Kernel$_1$ UPDATE FUNCTION

Kernel$_n$ UPDATE FUNCTION

G(x; φ)

x

Conv$_1$(x; Kernel$_1$)

Conv$_n$(x; Kernel$_n$)

Loss

## FIG. 12

# FIG. 13

EP 4 475 035 A1

FIG. 14

FIG. 15

EP 4 475 035 A1

FIG. 16

EP 4 475 035 A1

*FIG. 17*

FIG. 18

EP 4 475 035 A1

# FIG. 19

INFORMATION
PROCESSING DEVICE

PROCESSOR — 871
ROM — 872
RAM — 873

874

BRIDGE — 875

876

I/F — 877

INPUT DEVICE — 878
OUTPUT DEVICE — 879
STORAGE — 880
DRIVE — 881
CONNECTION PORT — 882
COMMUNICATION DEVICE — 883

REMOVABLE STORAGE MEDIUM — 901
EXTERNAL CONNECTION DEVICE — 902

90

EP 4 475 035 A1

FIG. 20

FIG. 21

910

G(x; φ)

x UPDATE FUNCTION

F(x; θ)

x

<table>
<tr><td colspan="2">**INTERNATIONAL SEARCH REPORT**</td><td colspan="2">International application No.<br><br>**PCT/JP2023/000302**</td></tr>
</table>

**A.    CLASSIFICATION OF SUBJECT MATTER**

*G06N 3/044*(2023.01)i
FI:   G06N3/044

According to International Patent Classification (IPC) or to both national classification and IPC

**B.    FIELDS SEARCHED**

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/070819 A1 (NTT DOCOMO, INC.) 15 April 2021 (2021-04-15) paragraphs [0049], [0062], fig. 9 | 1, 7-8, 16-19 |
| A | | 2-6, 9-15 |
| A | JP 9-114503 A (TOSHIBA CORP.) 02 May 1997 (1997-05-02) paragraph [0053], fig. 4 | 1-19 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/000302**

| Patent document cited in search report | | | Publication date (day/month/year) | Patent family member(s) | Publication date (day/month/year) |
|---|---|---|---|---|---|
| WO | 2021/070819 | A1 | 15 April 2021 | (Family: none) | |
| JP | 9-114503 | A | 02 May 1997 | US 5852817 A thirteenth paragraph, line 50 to fourteenth paragraph, line 11, fig. 4 | |

Form PCT/ISA/210 (patent family annex) (January 2015)

## REFERENCES CITED IN THE DESCRIPTION

**Patent documents cited in the description**

- JP 2020046833 A